# EUROPEAN PATENT SPECIFICATION

(11) **EP 1 183 168 B1**
(45) Date of publication and mention of the grant of the patent: **13.10.2004**
(21) Application number: 01914292.6
(22) Date of filing: 14.03.2001
(51) Int. Cl.: B60R 21/02, B60R 21/16, B62D 25/10

(54) **A SAFETY ARRANGEMENT**
SICHERHEITSVORRICHTUNG
DISPOSITIF DE SECURITE

(30) Priority: 14.03.2000 GB 0006140; 16.05.2000 GB 0011796
(43) Date of publication of application: 06.03.2002
(60) Divisional application: 03017080.7
(73) Proprietor: AUTOLIV DEVELOPMENT AKTIEBOLAG, 447 83 Vargarda (SE)
(72) Inventor: HJERPE, Erik, S-411 32 Göteborg (SE)
(74) Representative: Parry, Simon James
(86) International application number: PCT/SE2001/000529
(87) International publication number: WO 2001/068410

(56) References cited:
- WO-A1-00/50271
- WO-A1-98/13226
- WO-A2-99/30931
- DE-A1- 19 727 598
- DE-A1- 19 858 636
- DE-A1- 19 933 396
- DE-U1- 29 821 632
- DE-U1- 29 823 235

## Description

**THE PRESENT INVENTION** relates to a safety arrangement in the form of an air-bag arrangement, such as air-bag arrangement mounted in a motor vehicle.

When a motor vehicle is involved in an impact, especially a front impact, the floor pan of the vehicle may be distorted. The distortion of the floor pan may be such that, if no protection is provided, a very substantial upward acceleration is applied to the feet of an occupant of the vehicle. This acceleration, although being an acceleration of a very short distance, may lead to substantial injuries to the feet or ankles of the occupant of the vehicle. Alternatively the floor pan of the vehicle may be distorted so that it intrudes substantially into the cabin of the motor vehicle.

It has been proposed to provide an air-bag or inflatable element located on the floor pan in the foot-well of a motor vehicle at a position beneath (or beneath and in front of) the feet of the occupant, the air-bag being adapted to be inflated as a consequence of an impact being detected, the inflated air-bag thus serving to lift the feet of the occupant above the floor pan of the vehicle, providing a desirable degree of protection.

It has been found that there is a particular risk of injuries arising if the forces applied on the feet and/or the ankles of an occupant of a vehicle are very high, or are exerted on the feet or ankles at a disadvantageous angle. An ankle could be broken, for example, if the foot is caused to rotate or bend in a specific direction relative to the lower leg. Thus, if an occupant has a typical position within a motor vehicle, an ankle could be broken if the foot rotates about a line that is substantially aligned with the longitudinal axis of the vehicle. Injuries can also arise if the front part of the foot is bent upwards too much relative to the heel.

DE 19727598 A discloses an air-bag arrangement to be situated beneath the feet of an occupant in a vehicle according to the preamble of claim 1. The arrangement incorporates an air-bag located on the floor pan of a vehicle with a cover located above the air-bag. As the air-bag is inflated it lifts the cover from an initial position to an elevated position, to raise the feet of the vehicle occupant and hopefully prevent injury.

The present invention seeks to provides an improved air-bag arrangement.

Accordingly, the present invention provides an air-bag unit adapted to be positioned on the floor pan of a motor vehicle in the foot-well, to be located beneath the feet of an occupant of the vehicle, the air-bag unit having an air-bag, and having an upper cover located above the air-bag, the unit being such that on inflation of the air-bag the cover is lifted from its initial position to an elevated position, wherein the upper cover comprises two sections inter-connected by a hinge-line, the two sections being adapted such that on inflation of the air-bag the part of the cover adjacent the hinge-line is elevated to a greater extent than the portions of the cover which are remote from the hinge-line.

Preferably a pair of attachment elements are provided, the attachment elements each being connected to one part of the upper cover and being adapted to be connected to part of the motor vehicle to restrict upward movement of the said part of the cover.

Conveniently the cover comprises two sections, in the form of a first section adapted to be substantially horizontal and the second section adapted to be inclined, the air-bag lying under the second section presenting a relatively large chamber, and the air-bag lying under first section presenting a plurality of separate chambers.

Advantageously each of the separate chambers is a tapering chamber.

Conveniently the inclined section of the cover is provided with a slit separating the inclined section into two regions, one region being adapted to lie on a foot-rest.

Advantageously the upper cover is provided with reinforcing means, the reinforcing means extending transversely of the cover.

Conveniently the cover is provided with reinforcing means to resist deformation of the cover, there being more or stronger reinforcing means in the region of the cover adapted to lie under the heel of an occupant of the vehicle than in other areas of the cover.

Preferably the reinforcing means extend transversely of the cover.

Conveniently the air-bag is of metal.

In the embodiments of the invention the reinforcing means may comprise thickened portions of the cover or, alternatively, may comprise integral elements of reinforcing material located within the cover. If the cover is moulded of plastics material, the reinforcing elements may be moulded into the cover.

The air-bag may be secured to the cover by adhesive or, alternatively, the cover is provided with integrally formed tongues, the air-bag being connected to the cover by means of elements provided on the air-bag which engage the said tongues.

In a preferred embodiment of the invention the cover forms part of a housing that contains the air-bag.

In an alternative embodiment the cover rests on the air-bag.

In order that the invention may be more readily understood, and so that further features thereof may be appreciated, the invention will now be described, by way of example, with reference to the accompanying drawings in which:
FIGURE 1 illustrates an air-bag arrangement in accordance with the invention, before inflation thereof,
FIGURE 2 shows the air-bag arrangement of Figure 1 when inflated,
FIGURE 3 is an enlarged sectional side view taken on the line II-II of Figure 5 showing thickening portions that reinforce part of the cover of the air-bag arrangement as shown in Figures I and 2,
FIGURE 4 is a view corresponding to Figure 3 showing an alternative embodiment of the invention,
FIGURE 5 is a view of the under-side of the cover of the air-bag arrangement as shown in Figures 1 and 2,
FIGURE 6 is a sectional side view, corresponding with Figure 3, showing a further embodiment of the invention in which reinforcing bars are provided in the cover,
FIGURE 7 is a view, from above, of the air-bag arrangement of Figures 1 and 2 with the upper cover removed to show the air-bag in position,
FIGURE 8 is a view of an alternative embodiment of the invention, corresponding to Figure 1,
FIGURE 9 is an enlarged view of the punched-out attachment tongues present in the embodiment of Figure 8, and,
FIGURE 10 is a side view of a further embodiment of the invention.

Referring to the accompanying drawings, an air-bag arrangement in accordance with the present invention is intended to be mounted on the floor pan of a motor vehicle in the foot-well immediately beneath and in front of the feet of an occupant of a vehicle. The illustrated arrangement may be covered by a carpet or the like, or may be formed integrally with a carpet or the like.

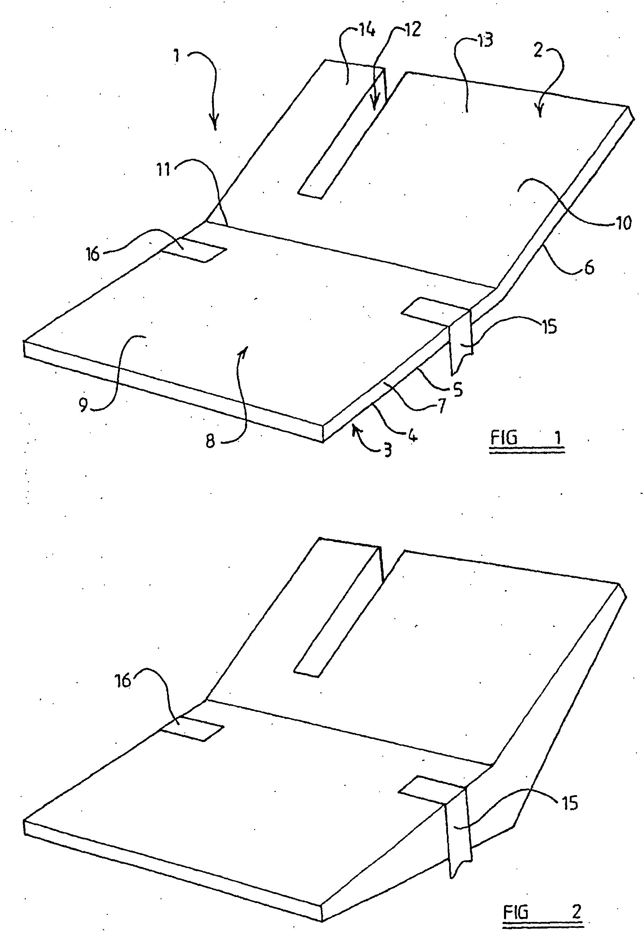

Referring to Figure 1 of the accompanying drawings, an air-bag unit 1 in accordance with one aspect of the invention comprises a damp-proof sealed rectangular housing 2 which in this embodiment is made of a plastics material. The housing comprises a lower portion 3 having a base 4 configured to lie on the floor pan of the motor vehicle in which the air-bag unit is mounted. In the illustrated embodiment the base 4 comprises an initial flat substantially horizontal region 5, adapted to lie on a horizontal part of the foot-well, and has an upwardly inclined region 6, adapted to lie on an inclined region of the foot-well, for example, beneath the accelerator brake (and clutch) pedals of the vehicle.

The lower portion 3 is connected, by means of side walls 7, to an upper cover 8. The upper cover 8 comprises two sections, namely a first horizontal section 9 which extends over the horizontal part 5 of the base 4 of the housing, and a second, inclined section 10 which lies over the inclined part 6 of the base. A foldable hinge-line 11 exists between the first horizontal section 9 and the inclined section 10 of the upper cover 8.

The housing 2 thus presents a substantially planar horizontal portion adapted to be mounted on the horizontal part of the foot-well, and an inclined portion to be mounted on the inclined portion of the foot-well. Optionally the inclined portion may be provided with an axially extending slot 12 located adjacent one edge and extending towards the hinge-line 11, thus serving to divide the inclined portion into two regions, namely region 13 of substantial size and region 14 of lesser size. The region 14 may be located on a foot-rest, if such a foot-rest is provided within the vehicle.

The housing is mounted in position on the motor vehicle by means of two restraining straps 15, 16 which extend from part of the first horizontal section 9 of the upper cover 8 adjacent the hinge-line 11 downwardly, adjacent the sides of the housing, to fixed mounting points or the floor pan of the vehicle.

An air-bag, which will be described hereinafter, is contained within the housing, and when the air-bag is inflated the upper cover 8 tends to move upwardly relative to the lower portion 3 of the housing. The movement of the initially horizontal first section 9 of the upper cover 8 is restricted by the straps 15 and 16. The straps 15 and 16, as shown in Figure 2, become tense, thus restricting the upward movement of the initially horizontal first section 9 of the cover 8. This, in turn, restricts the upward movement of the hinge-line 11 and effects some control upon the upward movement of the initially inclined section 10 of the upper cover 8. Thus even if the floor beneath the air-bag arrangement 1 becomes distorted or deformed, the cover 8 will only rise to a predetermined limited extent.

During inflation of the air-bag the side walls 7 of the housing either rupture or, alternatively, expand.

It is to be appreciated that the design of the housing is such that the maximum upward movement of the cover 8 will occur in the region of the hinge-line 11. Thus the edge of the initially horizontal section 9 of the cover 8 which is furthest from the hinge-line 11 is connected to the lower part 3 of the housing in such a way that this edge of the portion of the cover 8 will not move upwardly substantially on inflation of the air-bag. Similarly, the edge of the initially inclined section 10 of the cover which is furthest from the hinge-line 11 is connected to the lower part 3 of the housing in such a way that this edge does not move upwardly substantially upon inflation of the air-bag.

As a consequence, the portion of the upper cover 8 that initially supports the heels of the occupant, which will typically be a portion of the cover adjacent the hinge-line 11, is elevated, on inflation of the air-bag, to a greater extent than the portion of the cover that supports the forward part of the foot. This, it is believed, will serve to prevent the foot of the occupant being bent in an undesirable manner upon inflation of the air-bag.

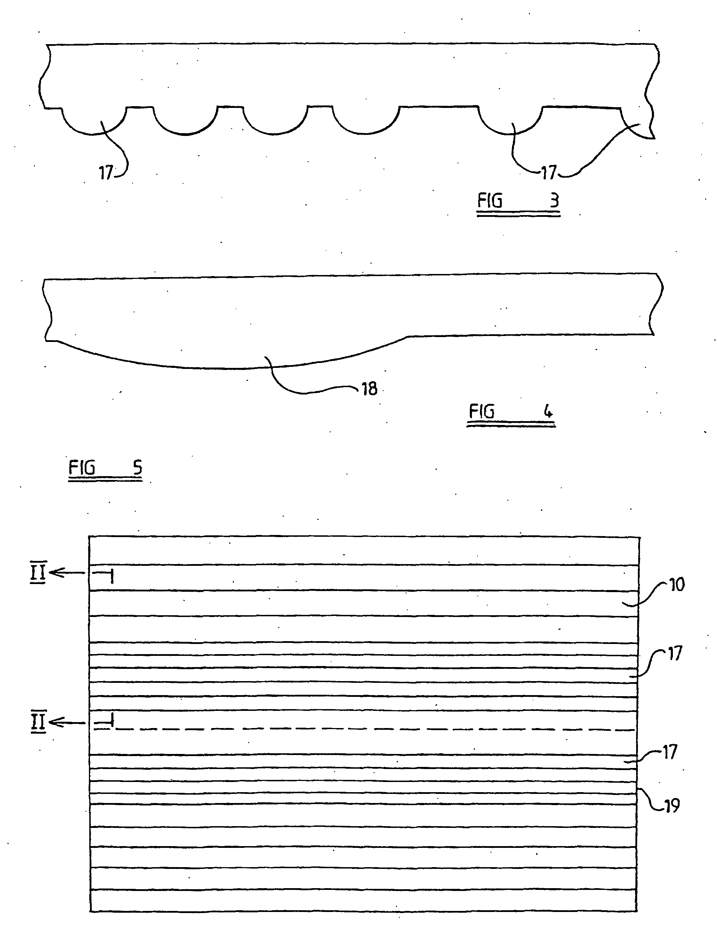

Thus the force applied to the under-part of the foot of the occupant will be applied with a major part of the force being applied to the heel portion, and the heel portion is the part of the foot that is best able to withstand this force. In order to further amplify this effect it is desirable to have the portion of the cover located beneath the heels of the occupant somewhat stiffer, with a greater resistance to bending in the axial direction, than the portion of the cover located beneath the forefoot of the occupant. Thus, as shown in Figure 3 and Figure 5, a plurality of reinforcing ribs 17 are provided on the under-surface of the inclined part 10 of the cover. Ribs 17 are also provided on the under-surface of the horizontal section 9 of the cover. The reinforcing ribs are spaced closely together in the region of each part 9; 10 of the cover adjacent the hinge-line 11. The reinforcing ribs extend transversely, the reinforcing ribs 17 being spaced further apart in the portions of the originally planar section 9 and the originally inclined section 10 of the cover furthest from the hinge-line 11. The reinforcing ribs thus provide maximum stiffness, i.e. maximum resistance to bending, in the region to be adjacent the heels of feet resting on the cover 8.

It is also to be appreciated that in this embodiment of the invention, because the reinforcing ribs extend transversely relative to the axis of the vehicle, the cover has substantial transverse strength, and resists any tendency to bend in the transverse direction. Thus there is very little risk of the cover moving, on inflation of the air-bag, in such a way that a twisting movement is applied to the foot, tending to twist the foot about an axis which is aligned with the longitudinal axis of the vehicle.

Because there is a greater number of transverse ribs 17 beneath the heel of the foot rather than beneath the forward part of the foot, there is only a minimal risk of the forward part of the foot being moved upwardly, relative to the heel, in an undesirable manner.

Figure 4 illustrates a modified embodiment of the invention where, instead of having a plurality of ribs 17, a single reinforcing rib 18 is provided which provides reinforcement in the desired area. The reinforcing rib 18 is positioned to be located directly beneath the heel of a foot resting on the housing 2.

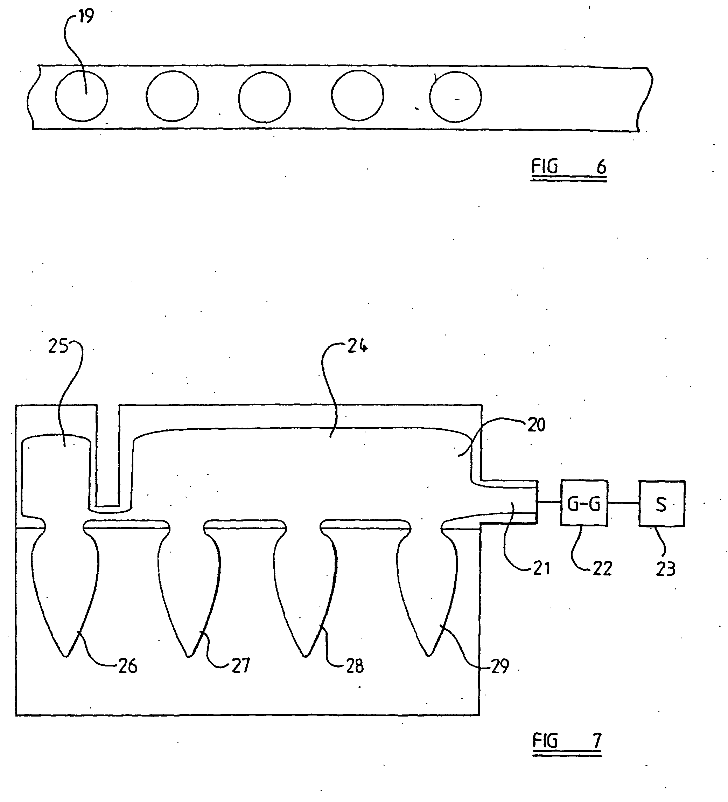

Figure 6 illustrates a further modified embodiment of the invention in which, instead of having reinforcing ribs, such as ribs 17 or 18, transversely extending reinforcing bars 19 are provided. The bars may be formed of metal or the like, and may be moulded integrally within the cover 8. The bars will be spaced apart in the same manner as the ribs 17 as described above.

Figure 7 illustrates the housing 2 that has been described above, with the upper cover removed. An air-bag 20 is shown provided within the housing. The air-bag 20 is provided with a gas flow duct 21 which is connected to an appropriate gas generator 22. The gas generator 22 is associated with a sensor 23 responsive to an impact or substantial deceleration of the vehicle. On sensing an impact or substantial deceleration, the sensor activates the gas generator 22 which inflates the air-bag 20.

The air-bag 20 has a relatively large chamber 24 and a smaller chamber 25 located beneath the initially inclined section 10 of the upper cover 8, the chambers being on either side of the slot 12 that divides the inclined portion of the housing into the regions 13 and 14. The chambers 24, 25 are connected to a plurality of smaller discrete chambers 26, 27, 28, 29 which extend between the initially horizontal portion 9 of the cover 8 and the lower part 3 of the housing. Each of the discrete chambers has a portion that will have a substantial diameter when inflated located adjacent the hinge-line 11 and a tapering portion extending away from the hinge-line 11. It can be seen that the air-bag is provided with chambers which are configured so that, on inflation of the air-bag, the housing will adopt the position illustrated in Figure 2 and as described above.

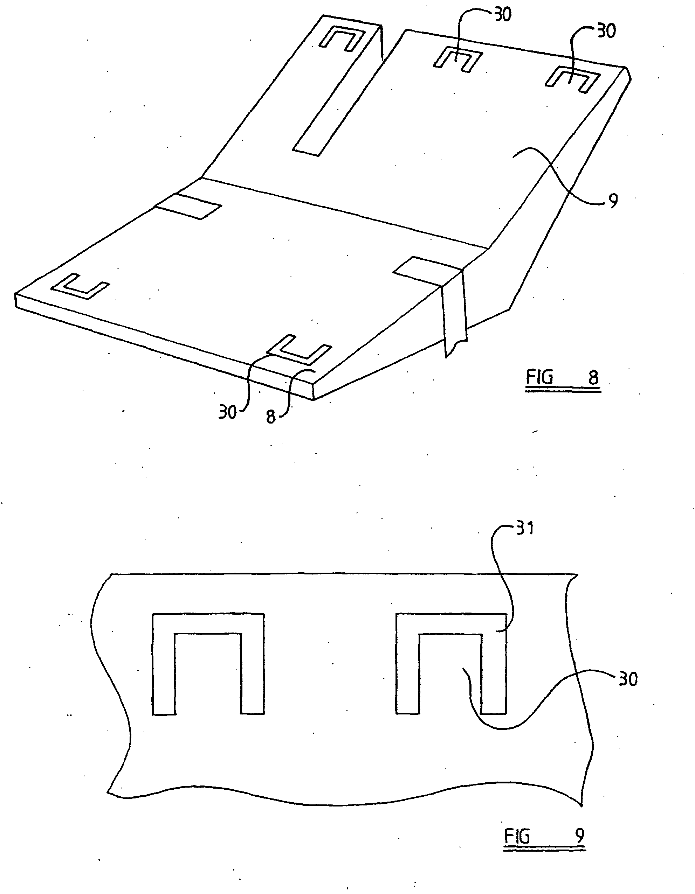

In the embodiment as described, the air-bag may be glued or otherwise secured to the housing so that the air-bag will be retained with an appropriate position within the housing. In the alternative embodiment illustrated with reference to Figures 8 and 9, the cover 8 is provided with a plurality of securing tabs formed by cut-out tongues 30. Each cut-out tongue 30 is constituted by forming a substantially "U"-shaped slot 31 within the material of the cover. Each tongue 30 may be connected to an appropriate "loop" provided on the air-bag, to secure the air-bag in position relative to the cover. With the opposed ends of the air-bag fixed to the tongues 30 close to the end of the cover 8, and with the straps 15, 16 securing parts of the first horizontal section 9 of the upper cover 8 adjacent the hinge-line 11 to the floor pan of the vehicle, as the air-bag beneath the cover 8 inflates, so the opposed ends of the cover will tend to rest against the floor pan of the vehicle.

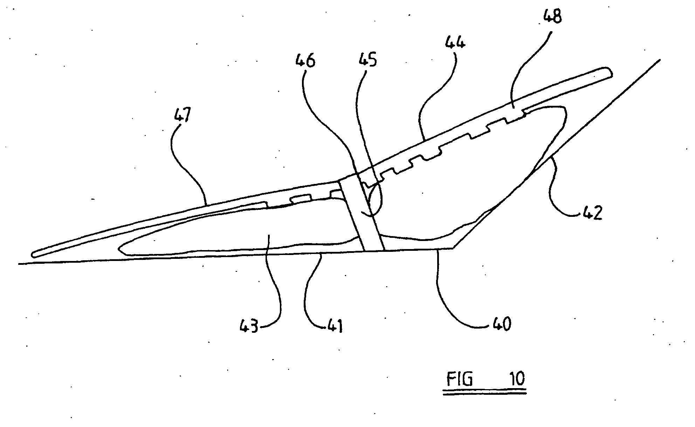

Whilst in the above-described embodiments of the invention the cover forms part of a housing, it is to be understood that in a modified embodiment of the invention, as illustrated in Figure 10, the cover may simply be a cover that rests on the air-bag and which does not form part of the housing. Figure 10 thus illustrates the floor pan 40 of a motor vehicle, the floor pan having a horizontal section 41 and an inclined section 42. Resting directly on the floor pan of the vehicle is an air-bag 43. The air-bag 43 is preferably a metal air-bag, since the air-bag will not be protected by a housing, since no housing is present. The air-bag may have a configuration similar to that of the air-bag shown in Figure 7.

Resting on top of the air-bag is a cover 44, which is substantially identical to the cover 8 described above. A strap 45 is provided, in the region of a hinge-line 46 that is present in the middle of the cover, in order to hold the cover in position.

The air-bag 43 will be associated with a gas generator which, in turn, is associated with a sensor.

It is to be appreciated that in an initial condition of the air-bag unit shown in Figure 10, the cover 44 will present a first substantially horizontal section 47 lying above the horizontal section 41 of the floor pan 40, and a second inclined section 48 lying above the inclined section 42 of the floor pan 40. On inflation of the air-bag 43, the cover will move to the position illustrated in Figure 10, upward movement of the cover being restricted by the straps 45.

In the present specification "comprise" means "includes or consists of' and "comprising" means "including or consisting of".

## Claims

1. An air-bag unit adapted to be positioned on the floor pan of a motor vehicle in the foot-well, to be located beneath the feet of an occupant of the vehicle, the air-bag unit (1) having an air-bag, and having an upper cover (8) located above the air-bag, the unit being such that on inflation of the air-bag the cover (8) is lifted from its initial position to an elevated position **characterised in that** the upper cover comprises two sections (9,10) inter-connected by a hinge-line (11), the two sections (9,10) being adapted such that on inflation of the air-bag the part of the cover adjacent the hinge-line (11) is elevated to a greater extent than the portions of the cover which are remote from the hinge-line (11).

2. A unit according to Claim 1 wherein a pair of attachment elements (15,16) are provided, the attachment elements (15,16) each being connected to one part of the upper cover (8) and being adapted to be connected to part of the motor vehicle to restrict upward movement of the said part of the cover (8).

3. A unit according to Claim 1 or Claim 2 wherein the cover (8) comprises two sections (9, 10), in the form of a first section (9) adapted to be substantially horizontal and the second section (10) adapted to be inclined, the air-bag lying under the second section (10) presenting a relatively large chamber (24), and the air-bag lying under first section (9) presenting a plurality of separate chambers (26-29).

4. A unit according to Claim 3 wherein each of the separate chambers (26-29) is a tapering chamber.

5. A unit according to Claim 3 or 4 wherein the inclined section (10) of the cover (8) is provided with a slit (12) separating the inclined section into two regions (13,14), one region being adapted to lie on a foot-rest (14).

6. A unit according to any one of the preceding Claims wherein the cover (8) is provided with reinforcing means, the reinforcing means extending transversely of the cover.

7. A unit according to any one of Claims 1 to 5 wherein the cover (8) is provided with reinforcing means to resist deformation of the cover (8), there being more or stronger reinforcing means in the region of the cover (8) adapted to lie under the heel of an occupant of the vehicle than in other areas of the cover (8).

8. A unit according to Claim 7 wherein the reinforcing means extend transversely of the cover (8).

9. A unit according to Claim 7 wherein the air-bag is of metal.

10. A unit according to any one of Claims 6 to 9 wherein the reinforcing means comprise thickened portions of the cover (8).

11. A unit according to any one of Claims 6 to 9 wherein the reinforcing means comprise integral elements of a reinforcing material located within the cover (8).

12. A unit according to any one of the preceding Claims wherein the air-bag is secured to the cover (8) by adhesive.

13. An unit according to any one of Claims 1 to 11 wherein the cover (8) is provided with integrally formed tongues (30), the air-bag being connected to the cover (8) by means of elements provided on the air-bag which engage the said tongues (30).

14. A unit according to any one of the preceding Claims wherein the cover (8) forms part of a housing that contains the air-bag.

15. A unit according to any one of Claims 1 to 13 wherein the cover (8) rests on the air-bag.

## Patentansprüche

1. Airbageinheit, die dazu bestimmt ist, auf dem Bodenblech eines Motorfahrzeugs im Fußraum angeordnet zu werden, so daß sie sich unterhalb der Füße eines Insassen des Fahrzeugs befindet, wobei die Airbageinheit (1) einen Airbag aufweist und eine obere Abdeckung (8) aufweist, die sich oberhalb des Airbags befindet, wobei die Einheit derart ist, daß die Abdeckung (8) beim Aufblasen des Airbags von ihrer ursprünglichen Position in eine angehobene Position angehoben wird, **dadurch gekennzeichnet, daß** die obere Abdeckung zwei Abschnitte (9, 10) aufweist, die durch eine Gelenklinie (11) miteinander verbunden sind, wobei die beiden Abschnitte (9, 10) so angepaßt sind, daß bei einem Aufblasen des Airbags der Teil der Abdeckung benachbart zu der Gelenklinie (11) in einem größeren Ausmaß angehoben wird als die Abschnitte der Abdeckung, die entfernt von der Gelenklinie (11) liegen.

2. Einheit nach Anspruch 1, **dadurch gekennzeichnet, daß** ein Paar von Befestigungselementen (15, 16) vorgesehen ist, wobei die Befestigungselemente (15, 16) jeweils mit einem Teil der oberen Abdeckung (8) verbunden sind und dazu bestimmt sind, mit einem Teil des Motorfahrzeugs verbunden zu werden, um eine nach oben gerichtete Bewegung des genannten Teils der Abdeckung (8) einzuschränken.

3. Einheit nach Anspruch 1 oder 2, **dadurch gekennzeichnet, daß** die Abdeckung (8) zwei Abschnitte (9, 10) aufweist, in der Form eines ersten Abschnitts (9), der dazu bestimmt ist, im wesentlichen horizontal zu sein, wobei der zweite Abschnitt (10) dazu bestimmt ist, geneigt zu sein, wobei der Airbag, der sich unter dem zweiten Abschnitt (10) befindet, eine relativ große Kammer (24) aufweist, und der Airbag, der sich unter dem ersten Abschnitt (9) befindet, eine Anzahl von getrennten Kammern (26-29) aufweist.

4. Einheit nach Anspruch 3, **dadurch gekennzeichnet, daß** jede der getrennten Kammern (26-29) eine zulaufend ausgebildete Kammer ist.

5. Einheit nach Anspruch 3 oder 4, **dadurch gekennzeichnet, daß** der geneigte Abschnitt (10) der Abdeckung (8) mit einem Schlitz (12) versehen ist, der den geneigten Abschnitt in zwei Bereiche (13, 14) trennt, wobei ein Bereich dazu bestimmt ist, auf einer Fußstütze (14) aufzuliegen.

6. Einheit nach einem der vorangehenden Ansprüche, **dadurch gekennzeichnet, daß** die Abdeckung (8) mit Verstärkungsmitteln versehen ist, wobei sich die Verstärkungsmittel quer über die Abdeckung erstrecken.

7. Einheit nach einem der Ansprüche 1 bis 5, **dadurch gekennzeichnet, daß** die Abdekkung (8) mit Verstärkungsmitteln versehen ist, um einer Deformation der Abdeckung (8) entgegenzuwirken, wobei mehr oder stärkere Verstärkungsmittel in dem Bereich der Abdeckung (8) vorhanden sind, die dazu bestimmt ist, unter dem Absatz eines Insassen des Fahrzeugs zu liegen, im Vergleich zu anderen Bereichen der Abdeckung (8).

8. Einheit nach Anspruch 7, **dadurch gekennzeichnet, daß** sich die Verstärkungsmittel quer zu der Abdeckung (8) erstrecken.

9. Einheit nach Anspruch 7, **dadurch gekennzeichnet, daß** der Airbag aus Metall besteht.

10. Einheit nach einem der Ansprüche 6 bis 9, **dadurch gekennzeichnet, daß** die Verstärkungsmittel verdickte Bereiche der Abdeckung (8) umfassen.

11. Einheit nach einem der Ansprüche 6 bis 9, **dadurch gekennzeichnet, daß** die Verstärkungsmittel ein Ganzes bildende Elemente aus einem Verstärkungsmaterial umfassen, die innerhalb der Abdeckung (8) angeordnet sind.

12. Einheit nach einem der vorangehenden Ansprüche, **dadurch gekennzeichnet, daß** der Airbag an der Abdeckung (8) mittels eines Klebstoffs befestigt ist.

13. Einheit nach einem der Ansprüche 1 bis 11, **dadurch gekennzeichnet, daß** die Abdekkung (8) mit einteilig ausgebildeten Laschen (30) versehen ist, wobei der Airbag mit der Abdeckung (8) mit Hilfe von Elementen verbunden ist, die auf dem Airbag vorgesehen sind und die mit den genannten Laschen (30) zusammenwirken.

14. Einheit nach einem der vorangehenden Ansprüche, **dadurch gekennzeichnet, daß** die Abdeckung (8) einen Teil eines Gehäuses bildet, in dem der Airbag aufgenommen ist.

15. Einheit nach einem der Ansprüche 1 bis 13, **dadurch gekennzeichnet, daß** die Abdekkung (8) auf dem Airbag aufliegt.

## Revendications

1. Un ensemble de sac gonflable de sécurité, adapté pour être positionné sur le plancher d'un véhicule automobile dans le puits pour les pieds, devant être placé au-dessous des pieds d'un occupant du véhicule, l'ensemble de sac gonflable de sécurité (1) comprenant un sac gonflable de sécurité et comprenant un couvercle supérieur (8) placé au-dessus du sac gonflable de sécurité, l'ensemble étant tel que, lors du gonflage dudit sac gonflable de sécurité, le couvercle (8) est levé de sa position initiale à une position élevée, **caractérisé en ce que** le couvercle supérieur comprend deus sections (9, 10) interconnectées par une ligne d'articulation (11), les deux sections (9, 10) étant adaptée de manière que, lors du gonflage du sac gonflable de sécurité, la partie du couvercle adjacente à la ligne d'articulation (11) est élevée à un degré plus élevé que les parties du couvercle distantes de la ligne d'articulation (11).

2. Un ensemble selon la revendication 1, dans lequel une paire d'éléments de fixation (15, 16) sont prévus, les éléments de fixation (15, 16) étant chacun connectés à une partie du couvercle supérieur (8) et étant adaptés pour être connecté à une partie du véhicule automobile, pour restreindre le déplacement de levée de ladite partie du couvercle (8).

3. Un ensemble selon la revendication 1 ou la revendication 2, dans lequel le couvercle (8) comprend deux sections (9, 10), réalisées à la forme d'une première section (9), adaptée pour être sensiblement horizontale, et la deuxième section (10), adaptée pour être inclinée,le sac gonflable de sécurité, situé sous la deuxième section (10), présentant une chambre (24) relativement grande et le sac gonflable de sécurité, situé sous la première section (9), présentant une pluralité de chambres (26 à 29) séparées.

4. Un ensemble selon la revendication 3, dans lequel chacune des chambres (26 à 29) séparées est une chambre à forme allant en s'effilant.

5. Un ensemble selon la revendication 3 ou 4, dans lequel la section inclinée (10) du couvercle (8) est munie d'une fente (12) séparant la section inclinée en deux régions (13, 14), une région étant adaptée pour être située sur un repose-pied (14).

6. Un ensemble selon l'une quelconque des revendications précédentes, dans lequel le couvercle (8) est muni de moyens de renforcement, les moyens de renforcement s'étendant en direction transversale du couvercle.

7. Un ensemble selon l'une des revendications 1 à 5, dans lequel le couvercle (8) est muni de moyens de renforcement pour résister à la déformation du couvercle (8), des moyens de renforcement, plus nombreux ou plus forts, étant prévus dans la région du couvercle (8), adaptée pour se situer au-dessous du talon d'un occupant du véhicule, que dans d'autres zones du couvercle.

8. Un ensemble selon la revendication 7, dans lequel les moyens de renforcement s'étendent en direction transversale du couvercle.

9. Un ensemble selon la revendication 7, dans lequel le sac gonflable de sécurité est réalisé en métal.

10. Un ensemble selon l'une quelconque des revendications 6 à 9, dans lequel les moyens de renforcement comprennent des parties épaissies du couvercle (8).

11. Un ensemble selon l'une quelconque des revendications 6 à 9, dans lequel les moyens de renforcement comprennent des éléments monoblocs de matériau de renforcement, placés à l'intérieur du couvercle (8).

12. Un ensemble selon l'une quelconque des revendications précédentes, dans lequel le sac gonflable de sécurité est fixé au couvercle (8) par de l'adhésif.

13. Un ensemble selon l'une quelconque des revendications 1 à 11, dans lequel le couvercle (8) est muni de languettes (30) formées d'une seule pièce, le sac gonflable de sécurité étant connecté au couvercle (8) à l'aide d'éléments, prévus sur le sac gonflable de sécurité, qui viennent en prise avec lesdites languettes (30).

14. Un ensemble selon l'une quelconque des revendications précédentes, dans lequel le couvercle (8) fait partie d'un boîtier contenant le sac gonflable de sécurité.

15. Un ensemble selon l'une quelconque des revendications 1 à 13, dans lequel le couvercle (8) repose sur le sac gonflable de sécurité.
